# EUROPÄISCHE PATENTSCHRIFT

(11) **EP 1 313 938 B1**
(45) Veröffentlichungstag und Bekanntmachung des Hinweises auf die Patenterteilung: **01.10.2014**
(21) Anmeldenummer: 01971960.8
(22) Anmeldetag: 24.08.2001
(51) Int. Cl.: F02K 9/34, F02K 9/62, B23P 15/00, B23K 31/02, F02K 9/97

(54) **RAKETENTRIEBWERK IN SEGMENTBAUWEISE UND VERFAHREN ZU SEINER HERSTELLUNG**
SEGMENTED ROCKET DRIVE AND METHOD FOR PRODUCING THE SAME
MOTEUR-FUSEE A SEGMENTS

(30) Priorität: 02.09.2000 DE 10043303
(43) Veröffentlichungstag der Anmeldung: 28.05.2003
(73) Patentinhaber: Astrium GmbH, 82024 Taufkirchen (DE)
(72) Erfinder: BEYER, Steffen, 81667 München (DE); BICHLER, Peter, 86938 Schondorf (DE); KEINATH, Wolfgang, 85653 Höhenkirchen-Siegertsbrunn (DE); KINDERMANN, Roland, 85540 Haar (DE); KUNZMANN, Dieter, 82024 Taufkirchen (DE)
(74) Vertreter: Ulrich, Thomas
(86) Internationale Anmeldenummer: PCT/EP2001/009775
(87) Internationale Veröffentlichungsnummer: WO 2002/018772

(56) Entgegenhaltungen:
- EP-A- 1 005 948
- WO-A-00/32920
- DE-A- 3 730 011
- US-A- 3 190 070
- US-A- 3 451 222
- US-A- 3 501 916
- US-A- 3 595 025
- US-A- 3 690 103
- US-A- 5 799 394

## Beschreibung

Die vorliegende Erfindung betrifft ein Raketentriebwerk in Segmentbauweise, d. h. es werden zumindest Teile des Raketentriebwerkes aus einzelnen Segmenten aufgebaut, die dann zu einer vollständigen Anordnung zusammengefügt werden.

Solche Raketentriebwerke sind aus dem Stand der Technik grundsätzlich bekannt. So zeigen US 5,032,201 und EP 0 561 537 Raketentriebwerke, bei denen ein Brennkammerraum von einer in Längsrichtung des Raketentriebwerkes segmentierten Ummantelung umgeben ist. Bei solchen Triebwerken ist jedoch ein relativ hoher Aufwand nötig, um ein Zusammenfügen der kompletten Struktur des Raketentriebwerkes zu ermöglichen und eine sichere und stabile Verbindung der einzelnen Komponenten des Raketentriebwerkes zu garantieren. Auch können die übrigen Komponenten des Raketentriebwerkes wie z. B. die Expansionsdüse nur durch aufwendige Verfahren hergestellt werden.

US 3,190,070 und US 3,690,103 offenbaren Brennkammern mit angrenzenden Expansionsdüsen bei denen Röhrchen mit unterschiedlichster Geometrie entlang der Längsrichtung des Triebwerks aneinandergefügt werden und somit eine geschlossene Wandung bilden. So entsteht die Brennkammer und die Expansionsdüse und erhält gleichzeitig Kühlkanäle zum Durchfluss eines Kühlmittels. Da jedoch Kühlkanäle mit kleinem Durchmesser erwünscht sind, müssen sehr viele Röhrchen in Längsrichtung verbaut werden, was sehr aufwendig ist und wobei durch die vielen Übergänge viele Kontaktstellen entstehen, an denen eine Undichtigkeit auftreten kann.

Die US 3,595,025 beschreibt eine Brennkammerkonstruktion eines Raketentriebwerks, die eine innere Wandung mit an deren Außenseite sich longitudinal erstreckenden Kühlkanälen aufweist. Ferner ist eine äußere Wandung vorgesehen, die durch Galvanisieren auf die innere Wandung aufgebracht ist. Sowohl die innere als auch die äußere Wandung sind aus einem einzigen Stück Sauerstofffreien Kupfers oder äquivalenten Materials wie Silber oder Molybdän gefertigt.

Die WO 00/32920 betrifft eine Düsenstruktur für Raketentriebwerke mit einer gekühlten Düsenwand. Die Düsenwand besteht hierbei aus mehreren gestreckten Panels, die sich vom Düsenein- bis zum -auslass erstrecken. Die Panels sind an ihren longitudinalen Seitenkanten miteinander verbunden. In jedem Panel sind mehrere Kühlkanäle geformt, die sich in die longitudinale Richtung eines Panels erstrecken.

Aufgabe der vorliegenden Erfindung ist es daher, ein Raketentriebwerk und ein Herstellungsverfahren dafür bereitzustellen, das eine vereinfachte Herstellung von Raketentriebwerken erlaubt und das eine sichere und stabile Verbindung von Komponenten des Raketentriebwerkes garantiert.

Diese Aufgabe wird gelöst durch die Merkmale der Patentansprüche 1 und 7.

Das erfindungsgemäße Verfahren zur Herstellung eines Raketentriebwerkes dient zur Herstellung eines Raketentriebwerkes mit einer Brennkammer und einer an die Brennkammer angrenzenden Expansionsdüse. Es werden nun mindestens zwei einteilige Segmentkörper hergestellt, wobei jeder Segmentkörper Teilkonturen der Brennkammer und der Expansionsdüse bildet. Somit stellen die Segmentkörper Einzelbausteine der späteren Struktur aus Brennkammer und Expansionsdüse dar. Die Segmentkörper werden zur Bildung der Brennkammer und der Expansionsdüse zusammengefügt, wobei aber vor dem Zusammenfügen in jeder der Segmentkörper mehrere Kühlkanäle und/oder Rippen ein- bzw. aufgebracht werden. Die Segmentkörper können dabei gleich groß oder auch unterschiedlich groß sein, wobei die Herstellung gleich großer Segmentkörper (Hälften, Drittel, Viertel oder ähnliches) das Herstellungsverfahren vereinfacht.

Somit kann in einem gemeinsamen Arbeitsgang die Brennkammer und die Expansionsdüse gebildet werden. Die Herstellung von Segmentkörpern kann außerdem leichter erfolgen als die Herstellung eines einstückigen Brennkammer- bzw. Expansionsdüsen-Hohlkörpers, da bei Segmentkörpern die Innen- und Außenflächen der Körper für eine Strukturierung der Segmentkörper und damit effektiv auch für eine Strukturierung der Brennkammer und Expansionsdüse leichter zugänglich sind. Somit können die Maße der Brennkammer und Expansionsdüse exakter eingestellt und auch vermessen werden. Für die Strukturierung können auch einfacher zu beherrschende Verfahren verwendet werden wie z. B. Fräsen.

Das Verbinden der Segmentkörper kann durch jedes geeignete Verfahren erfolgen. Insbesondere kann vorgesehen werden, dass die Segmentkörper direkt miteinander verbunden werden, insbesondere können sie durch Verlöten oder Verschweißen miteinander verbunden werden. Alternativ oder zusätzlich können die Segmentkörper durch Aufbringen einer Ummantelung miteinander verbunden werden. Diese Ummantelung kann durch das Aufbringen vorgeformter Teile aufgebracht werden, oder sie kann auch durch einen Abscheidungsprozess, z. B. einen Galvanikprozess, aufgebracht werden.

Es können, wie bereits erwähnt, auf einfache Weise Strukturierungen der Segmentkörper vorgenommen werden. Einerseits kann dadurch die Struktur der Brennkammer und der Expansionsdüse gezielt herausgebildet werden, andererseits können auch zusätzlich Strukturierungen wie z. B. Kühlkanäle oder Rippen in den Segmentkörpern geformt werden, die im späteren Betrieb des Raketentriebwerkes benötigt werden. Diese zusätzlichen Strukturen können, ebenso wie die Gesamtstruktur der Segmentkörper, durch geeignete, in der Regel einfacher zu beherrschende Verfahren hergestellt werden, z. B. durch Fräsen.

Die Erfindung umfasst außerdem ein Raketentriebwerk mit einer Brennkammer und einer an die Brennkammer angrenzenden Expansionsdüse, wobei die Brennkammer und die Expansionsdüse aus mindestens zwei einteiligen Segmentkörpern aufgebaut sind, wobei jeder Segmentkörper Teilkonturen der Brennkammer und der Expansionsdüse bildet und jeder Segmentkörper mehrere Kühlkanäle und/oder Rippen aufweist. Die Segmentkörper können, wie bereits erwähnt, gleich oder verschieden groß sein.

Vorteilhaft kann die Brennkammer und die Expansionsdüse in Längsrichtung des Raketentriebwerkes in Segmentkörper unterteilt sein, d. h. die Segmentkörper sind entlang von Schnittlinien miteinander verbunden, die in Längsrichtung des Raketentriebwerkes verlaufen. Solche Strukturen lassen sich leicht zusammenfügen und sind im zusammengefügten Zustand trotzdem stabil. Prinzipiell könnte auch eine gewisse Verzahnung der Segmentkörper entlang der Schnittlinien vorgesehen werden. Die Verbindung der Segmentkörper kann unterschiedlich ausgestaltet sein. Beispielsweise können die Segmentkörper miteinander verlötet sein oder durch eine Ummantelung miteinander verbunden sein.

Ein spezielles Ausführungsbeispiel der vorliegenden Erfindung wird nachfolgend anhand der Figuren 1 bis 3 erläutert.

Es zeigen:
- Fig. 1:: Querschnitt durch ein Raketentriebwerk mit Brennkammer und Expansionsdüse
- Fig. 2:: Außenansicht von Brennkammer, Expansionsdüse und Schubdüse eines Raketentriebwerks
- Fig. 3:: Darstellung von Segmentkörpern
- Fig. 4:: Darstellung der Brennkammer mit Expansionsdüse, aufgebaut aus Segmentkörpern

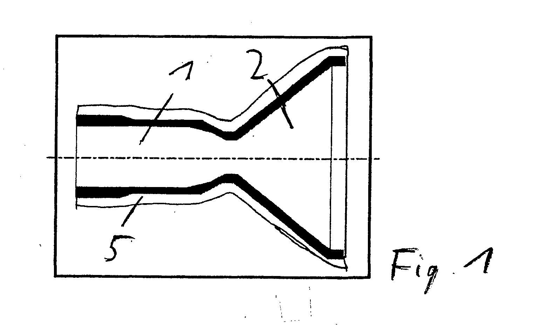

Durch die erfindungsgemäße Lösung wird es entbehrlich, für Raketentriebwerke Brennkammern und Expansionsdüsen durch die Bearbeitung von rotationssymmetrischen Körpern herzustellen, um die notwendigen Hohlkörperstrukturen zu erzeugen. In Fig. 1 ist ein solches Raketentriebwerk schematisch im Querschnitt dargestellt. Es weist eine Brennkammer 1 auf, an die im Bereich einer Verengung der Gesamtstruktur die Expansionsdüse 2 angrenzt.

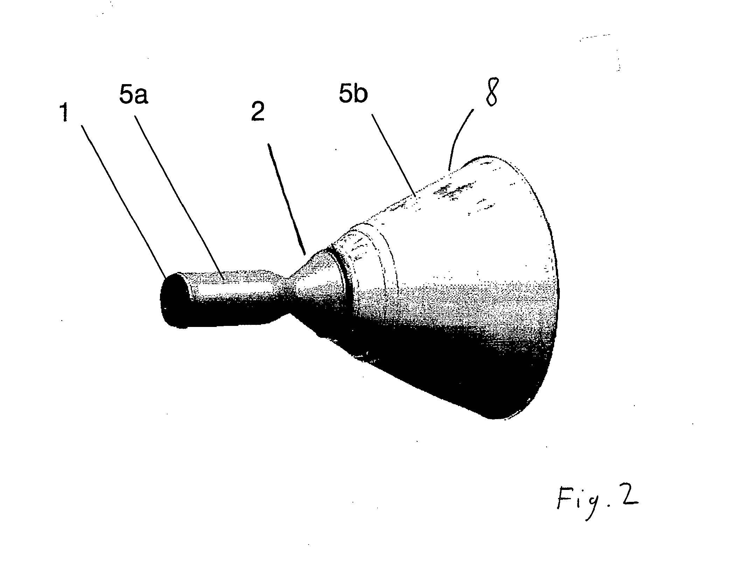

Fig. 2 zeigt eine Außenansicht eines Raketentriebwerks in mäßstabsgetreuer Darstellung. Es ist dabei die Brennkammer 1 dargestellt, die von einem Brennkammermantel 5a umgeben, der auch die direkt angrenzende Expansionsdüse 2 bedeckt. An die Expansionsdüse 2 schließt sich eine von einem Düsenmantel 5b umgebene Schubdüse 8 an. Brennkammer 1 und Expansionsdüse 2 einerseits sowie die Schubdüse 8 andererseits werden in diesem Fall durch je einen separaten Grundkörper gebildet, wobei zumindest der Grundkörper von Brennkammer 1 und Expansionsdüse 2 aus einzelnen Strukturkörpem als Segmentkörper besteht.

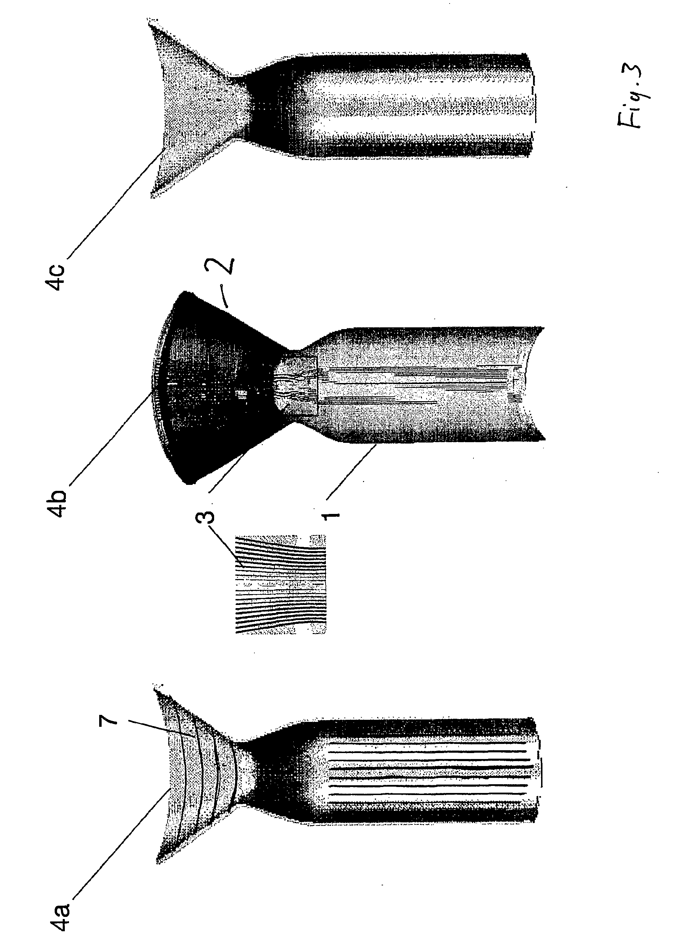

In Fig. 3 sind einzelne Strukturkörper 4a, 4b, 4c dargestellt, aus denen sich die Brennkammer 1 und die Expansionsdüse 2 zusammensetzen. Es ist deutlich erkennbar, dass die hier als drei gleich große und gleich geformte Einzelteile ausgebildeten einstückigen Strukturkörper 4a, 4b, 4c bereits die Strukturmerkmale sowohl der Brennkammer 1 als auch der Expansionsdüse 2 tragen: Diese Strukturkörper 4a, 4b, 4c können nach einem Einspannen eines Rohlings in eine Spannvorrichtung, durch Fräsen hergestellt werden, wobei mehrere Frässchritte einander nachgeschaltet werden können. Es kann zunächst ein Vorfräsen der Außenkontur sowie der Innenkontur des Strukturkörper 4a, 4b, 4c erfolgen, gefolgt von einem feineren Frässchritt, in dem auch zusätzliche Strukturen wie Kühlkanäle 3 auf der Außenseite und/oder Innenstrukturen 7 wie beispielsweise Längsrillen und/oder Querrillen oder Rippen auf der Innenseite der Strukturkörper 4a, 4b, 4c geformt werden können.

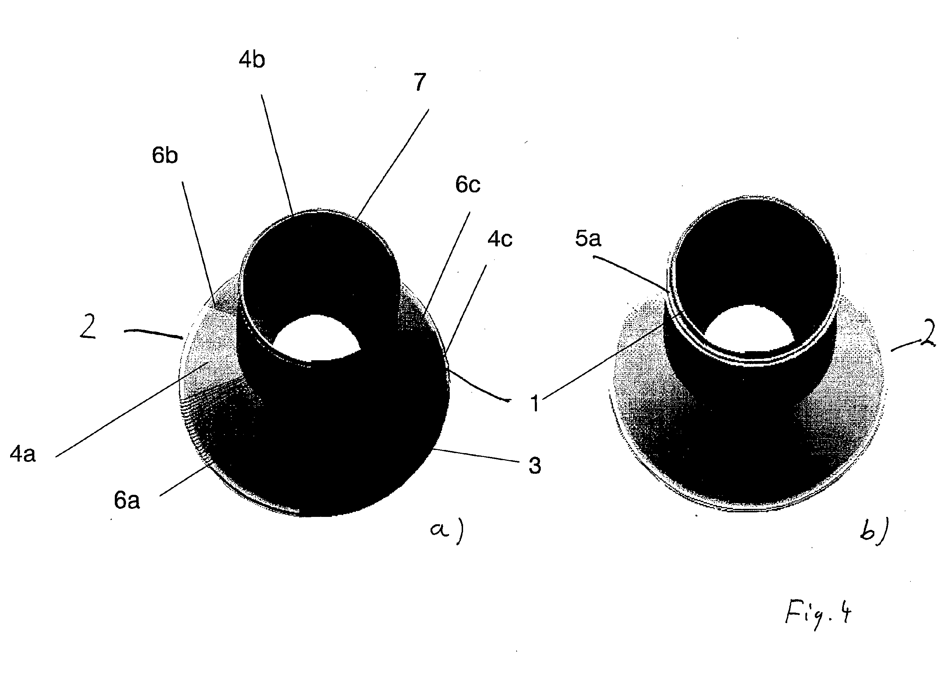

Fig. 4 zeigt das zusammengefügte Raketentriebwerk mit Brennkammer 1 und Expansionsdüse 2, wobei die Segmentkörper 4a, 4b, 4c entlang von Schnittlinien 6a, 6b, 6c, die in Längsrichtung des Raketentriebwerkes verlaufen, zusammengefügt sind. Die Segmentkörper 4a, 4b, 4c können entweder direkt durch Löten miteinander verbunden werden, es kann aber auch vorgesehen werden, dass die Verbindung der Segmentkörper 4a, 4b, 4c erst durch eine Ummantelung 5 erfolgt, die außen auf die Segmentkörper 4a, 4b, 4c aufgebracht wird. Eine solche Ummantelung 5 ist in Fig. 1 schematisch dargestellt. Auch Fig. 4b) zeigt eine solche Ummantelung 5a, die die Brennkammer 1 und die Expansionsdüse 2 umgibt. Fig. 4a) zeigt dagegen die entsprechende Anordnung ohne Ummantelung 5a, so dass die Kühlkanäle 3 auf der Außenseite noch frei liegen. Die Ummantelung 5a deckt dann die auf der Außenseite der Segmentkörper 4a,4b, 4c angebrachten Kühlkanäle 3 ab, so dass diese dann als allseitig geschlossene, nur noch an den Enden in Längsrichtung offene Kanäle vorliegen. Die Ummantelung 5 bzw. 5a kann beispielsweise galvanisch aufgebracht werden. Um ein Verstopfen der Kühlkanäle 3 durch die galvanische Abscheidung zu verhindern, werden diese vorher mit Wachs ausgefüllt. Nach erfolgter Abscheidung der Ummantelung 5, 5a kann das Wachs aufgeschmolzen werden und somit aus den Kühlkanälen 3 ausfließen, wodurch das Wachs aus den Kühlkanälen 3 entfernt wird. Analoge Maßnahmen sind grundsätzlich auch für eine Ummantelung 5b der Schubdüse 8 anwendbar.

## Patentansprüche

1. Verfahren zur Herstellung eines eine Brennkammer (1) und eine an die Brennkammer (1) angrenzende Expansionsdüse (2) aufweisenden und in Längsrichtung in Segmentkörper unterteilten Raketentriebwerkes aus mindestens zwei einteiligen Segmentkörpern (4a, 4b, 4c), wobei jeder Segmentkörper (4a, 4b, 4c) Teilkonturen der Brennkammer (1) und der Expansionsdüse (2) bildet und die Segmentkörper (4a, 4b, 4c) zur Bildung der Brennkammer (1) und der Expansionsdüse (2) zusammengefügt werden, **dadurch gekennzeichnet, dass** vor dem Zusammenfügen der Segmentkörper (4a, 4b, 4c) mehrere Kühlkanäle (3) und/oder Rippen in jedem Segmentkörper (4a, 4b, 4c) geformt werden.

2. Verfahren nach Anspruch 1, **dadurch gekennzeichnet, dass** die Kühlkanäle (3) durch Fräsen geformt werden.

3. Verfahren nach Anspruch 1 oder 2, **dadurch gekennzeichnet, dass** die Segmentkörper (4a, 4b, 4c) direkt miteinander, insbesondere durch Verlöten oder Verschweißen, verbunden werden.

4. Verfahren nach einem der Ansprüche 1 bis 3, **dadurch gekennzeichnet, dass** die Segmentkörper (4a, 4b, 4c) durch Aufbringen einer Ummantelung (5) miteinander verbunden werden.

5. Verfahren nach Anspruch 4, **dadurch gekennzeichnet, dass** die Ummantelung (5) galvanisch aufgebracht wird.

6. Verfahren nach einem der Ansprüche 1 bis 5, **dadurch gekennzeichnet, dass** die Segmentkörper (4a, 4b, 4c) durch Fräsen hergestellt werden.

7. Raketentriebwerk aus einer Brennkammer (1) und einer an die Brennkammer (1) angrenzenden Expansionsdüse (2), wobei die Brennkammer (1) und die Expansionsdüse (2) in Längsrichtung des Raketentriebwerkes in Segmentkörper unterteilt sind und aus mindestens zwei einteiligen Segmentkörpern (4a, 4b, 4c) aufgebaut sind und jeder Segmentkörper (4a, 4b, 4c) Teilkonturen der Brennkammer (1) und der Expansionsdüse (2) bildet, **dadurch gekennzeichnet, dass** jeder Segmentkörper mehrere Kühlkanäle (3) und/oder Rippen aufweist.

8. Raketentriebwerk nach Anspruch 7, **dadurch gekennzeichnet, dass** die Segmentkörper (4a, 4b, 4c) miteinander verlötet sind.

9. Raketentriebwerk nach Anspruch 7, **dadurch gekennzeichnet, dass** die Segmentkörper (4a, 4b, 4c) durch eine Ummantelung (5) miteinander verbunden sind.

## Claims

1. Method for producing a rocket drive, which has a combustion chamber (1) and an expansion nozzle (2) adjoining the combustion chamber (1) and is divided in the longitudinal direction into segment bodies, comprising at least two one-part segment bodies (4a, 4b, 4c), wherein each segment body (4a, 4b, 4c) forms partial contours of the combustion chamber (1) and of the expansion nozzle (2) and the segment bodies (4a, 4b, 4c) are joined together to form the combustion chamber (1) and the expansion nozzle (2), **characterized in that**, before the joining together of the segment bodies (4a, 4b, 4c), multiple cooling channels (3) and/or ribs are formed in each segment body (4a, 4b, 4c).

2. Method according to Claim 1, **characterized in that** the cooling channels (3) are formed by milling.

3. Method according to Claim 1 or 2, **characterized in that** the segment bodies (4a, 4b, 4c) are connected to one another directly, in particular by brazing or welding.

4. Method according to one of Claims 1 to 3, **characterized in that** the segment bodies (4a, 4b, 4c) are connected to one another by applying an encasing (5).

5. Method according to Claim 4, **characterized in that** the encasing (5) is applied by electroplating.

6. Method according to one of Claims 1 to 5, **characterized in that** the segment bodies (4a, 4b, 4c) are produced by milling.

7. Rocket drive comprising a combustion chamber (1) and an expansion nozzle (2) adjoining the combustion chamber (1), wherein the combustion chamber (1) and the expansion nozzle (2) are divided in the longitudinal direction of the rocket drive into segment bodies and are made up of at least two one-part segment bodies (4a, 4b, 4c), and each segment body (4a, 4b, 4c) forms partial contours of the combustion chamber (1) and of the expansion nozzle (2), **characterized in that** each segment body has multiple cooling channels (3) and/or ribs.

8. Rocket drive according to Claim 7, **characterized in that** the segment bodies (4a, 4b, 4c) are brazed to one another.

9. Rocket drive according to Claim 7, **characterized in that** the segment bodies (4a, 4b, 4c) are connected to one another by an encasing (5).

## Revendications

1. Procédé de fabrication d'un moteur-fusée présentant une chambre de combustion (1) et une tuyère d'expansion (2) adjacente à la chambre de combustion (1) et divisé dans la direction longitudinale en corps segmentés constitué d'au moins deux corps segmentés d'une seule pièce (4a, 4b, 4c), chaque corps segmenté (4a, 4b, 4c) formant des contours partiels de la chambre de combustion (1) et de la tuyère d'expansion (2) et les corps segmentés (4a, 4b, 4c) étant assemblés pour former la chambre de combustion (1) et la tuyère d'expansion (2), **caractérisé en ce qu'**avant l'assemblage des corps segmentés (4a, 4b, 4c), plusieurs canaux de refroidissement (3) et/ou ailettes sont formés dans chaque corps segmenté (4a, 4b, 4c).

2. Procédé selon la revendication 1, **caractérisé en ce que** les canaux de refroidissement (3) sont formés par fraisage.

3. Procédé selon la revendication 1 ou 2, **caractérisé en ce que** les corps segmentés (4a, 4b, 4c) sont connectés directement les uns aux autres, en particulier par brasage ou soudage.

4. Procédé selon l'une quelconque des revendications 1 à 3, **caractérisé en ce que** les corps segmentés (4a, 4b, 4c) sont connectés les uns aux autres par l'application d'une enveloppe (5).

5. Procédé selon la revendication 4, **caractérisé en ce que** l'enveloppe (5) est appliquée par voie électrolytique.

6. Procédé selon l'une quelconque des revendications 1 à 5, **caractérisé en ce que** les corps segmentés (4a, 4b, 4c) sont fabriqués par fraisage.

7. Moteur-fusée constitué d'une chambre de combustion (1) et d'une tuyère d'expansion (2) adjacente à la chambre de combustion (1), la chambre de combustion (1) et la tuyère d'expansion (2) étant divisées dans la direction longitudinale du moteur-fusée en corps segmentés et étant constituées d'au moins deux corps segmentés d'une seule pièce (4a, 4b, 4c) et chaque corps segmenté (4a, 4b, 4c) formant des contours partiels de la chambre de combustion (1) et de la tuyère d'expansion (2), **caractérisé en ce que** chaque corps segmenté présente plusieurs canaux de refroidissement (3) et/ou ailettes.

8. Moteur-fusée selon la revendication 7, **caractérisé en ce que** les corps segmentés (4a, 4b, 4c) sont brasés les uns aux autres.

9. Moteur-fusée selon la revendication 7, **caractérisé en ce que** les corps segmentés (4a, 4b, 4c) sont connectés les uns aux autres par une enveloppe (5).
